# FASCICULE DE BREVET EUROPEEN

(11) **EP 4 110 683 B1**
(45) Date de publication et mention de la délivrance du brevet: **10.09.2025**
(21) Numéro de dépôt: 21708272.6
(22) Date de dépôt: 26.01.2021
(51) Int. Cl.: B62D 21/11, B62D 25/08

(54) **VÉHICULE AVEC STRUCTURE MONTRANT UNE TROISIÈME VOIE D'EFFORT ENTRE LE BERCEAU ET UN BRANCARD AVANT, ET PROCÉDÉ DE MONTAGE D'UN TEL VÉHICULE**
FAHRZEUG MIT EINER STRUKTUR, DIE EINEN DRITTEN LASTPFAD ZWISCHEN MOTORTRÄGER UND EINER VORDEREN SEITENSCHIENE AUFWEIST, UND VERFAHREN ZUR MONTAGE EINES SOLCHEN FAHRZEUGS
VEHICLE HAVING A STRUCTURE THAT EXHIBITS A THIRD LOAD PATH BETWEEN THE CRADLE AND A FRONT SIDE RAIL, AND METHOD OF ASSEMBLING SUCH A VEHICLE

(30) Priorité: 27.02.2020 FR 2001979
(43) Date de publication de la demande: 04.01.2023
(73) Titulaire: Stellantis Auto SAS, 78300 Poissy (FR)
(72) Inventeur: SEVRIN, Alexandre, 91400 ORSAY (FR); KOZAK, Alban, 28410 BOUTIGNY PROUAIS (FR); GROSSET, Romain, 94230 CACHAN (FR)
(74) Mandataire: BCIP
(86) Numéro de dépôt international: PCT/FR2021/050143
(87) Numéro de publication internationale: WO 2021/170925

(56) Documents cités:
- EP-A1- 3 590 792
- DE-A1- 19 703 951
- FR-A1- 2 798 109
- FR-A1- 2 928 127
- FR-A1- 3 001 942

## Description

La présente invention revendique la priorité de la demande française 2001979 déposée le 27 Février 2020.

L'invention concerne la structure avant d'un véhicule automobile, les véhicules montrant une telle structure et les procédés de fabrication de tels véhicules.

Afin de relever les défis écologiques actuels, les constructeurs automobiles proposent de plus en plus souvent des véhicules qui sont déclinés selon différentes motorisations telles que les motorisations traditionnelles à moteur thermique et les motorisations électriques ou hybrides. Les véhicules à motorisation hybride et électrique ont vu leur masse augmenter considérablement par rapport à leur version à motorisation thermique du fait de la présence de batteries de propulsion. Cette augmentation en masse peut se situer par exemple autour de 300 à 400 kg pour un véhicule. En raison de ce différentiel de poids, les structures de caisse conçues pour des véhicules thermiques ne peuvent pas être utilisées pour produire des véhicules montrant une même silhouette avec une motorisation hybride ou électrique sans dégrader les prestations offertes par le véhicule en matière de sécurité. En effet, l'énergie à absorber en cas de choc frontal devient plus importante du fait de l'augmentation de la masse.

Il est connu de renforcer la structure avant d'un véhicule automobile au moyen de pièces de renfort ou de tirants.

Ainsi par exemple, le document FR2937943 décrit une structure de véhicule automobile comportant un châssis avec deux longerons reliés par une traverse ; une paire de bras, chaque bras comportant une première extrémité montée sur la portion avant d'un longeron et une extrémité libre ; et une caisse. La structure comporte en outre une pièce de renfort qui relie les extrémités libres desdits bras à ladite traverse, pour augmenter la rigidité de ladite structure ; un élément de sous-caisse ; et des moyens de renfort complémentaires qui comportent, de chaque côté dudit élément de sous-caisse, un tirant avant qui présente une première extrémité fixée à ladite pièce de renfort et une seconde extrémité fixée sur ledit élément de sous-caisse. La structure proposée tend à palier un manque de rigidité de la structure avant constaté en l'absence de pavillon de toit pour des véhicules de type cabriolet. Cette structure n'offre donc pas de solution aux problèmes de déformation pouvant apparaître du fait d'une augmentation de la masse du véhicule du fait de l'implantation de batteries de propulsion.

Le document FR2902401 décrit un tirant flexible en tôle de berceau destiné à relier l'extrémité d'un berceau pour essieu de véhicule automobile à la caisse dudit véhicule. Le tirant est formé d'une lame longitudinale présentant une torsion autour de son axe longitudinal de sorte qu'une première partie de la lame projetée dans un plan perpendiculaire à l'axe longitudinal de la lame forme un angle donné avec une projection dans le même plan d'une deuxième partie de la lame. Le tirant décrit permet d'éviter l'utilisation d'une articulation élastique entre le tirant et le berceau. Le tirant décrit ne permet pas de palier une augmentation de la masse du véhicule du fait de l'implantation de batteries de propulsion.

Le document FR2859157 décrit une structure d'une partie avant de véhicule automobile, comportant d'une part une partie supérieure formée d'au moins deux longerons qui s'étendent longitudinalement en avant de l'habitacle du véhicule et qui sont reliés dans leur partie extrême avant par une traverse, et d'autre part une partie inférieure formée d'au moins un berceau cadre qui supporte des éléments fonctionnels du véhicule, qui est formé d'au moins deux bras longitudinaux s'étendant vers l'avant du véhicule, et qui est en liaison avec les longerons de la partie supérieure par des tirants verticaux. La structure comporte en outre des absorbeurs d'énergie, qui sont fixés sur le berceau cadre vers l'avant du véhicule, et la dimension principale de ces absorbeurs d'énergie est longitudinale, de telle sorte qu'en cas de choc frontal, ces absorbeurs d'énergie absorbent suffisamment d'énergie pour minimiser la déformation du berceau cadre. La structure proposée ne résout pas le problème posé.

Le document FR2813269 décrit un ensemble de structure de caisse de véhicule automobile, du type qui comporte, d'avant en arrière, un élément de structure de caisse qui forme notamment support pour des organes mécaniques du véhicule, et une cellule rigide formant habitacle du véhicule automobile. L'élément de structure de caisse comporte, dans un premier plan horizontal supérieur, au moins deux longerons longitudinaux supérieurs qui s'étendent vers l'avant à partir de la cellule et, dans un second plan horizontal inférieur, deux longerons longitudinaux inférieurs qui s'étendent parallèlement en dessous des longerons supérieurs et dont des parties intermédiaires sont liées chacune au longeron supérieur associé par au moins un tirant. L'ensemble comporte des carénages latéraux de protection qui sont portés par les tirants. La structure proposée ne résout pas le problème posé.

Les documents EP3590792, FR2798109 et FR2928127 divulguent un véhicule comportant un berceau fixé au niveau d'extension arrière à un brancard directement ou via un tirant.

L'invention a pour objectif d'apporter une réponse à au moins un des inconvénients et problèmes rencontrés dans l'art antérieur. En particulier, l'invention propose de résoudre les problèmes liés à l'accroissement des efforts lors d'un choc frontal pour des véhicules montrant une masse augmentée ; par exemple, du fait de la présence d'une motorisation impliquant la présence de batteries de propulsion.

A cet effet, et selon un premier aspect l'invention a pour objet un véhicule comprenant une paire de brancard avant et un berceau, le berceau comprenant un corps et des extensions arrière, le véhicule est remarquable en ce qu'au moins une extension arrière du berceau est fixée à un brancard par l'intermédiaire d'au moins un tirant. Au moins une extension arrière du berceau étant fixée à un brancard avant par l'intermédiaire d'au moins un tirant, le véhicule comprenant en outre au moins un support de fixation arrière de berceau et au moins un renfort de support de fixation arrière de berceau, le véhicule est remarquable en ce qu'au moins une extension arrière du berceau est fixée à un support de fixation arrière de berceau, à un renfort de support de fixation arrière de berceau et à un tirant par une vis de fixation commune.

Il va sans dire que le berceau est le berceau avant du véhicule.

Comme on l'aura compris à la lecture de la définition qui vient d'en être donnée, l'invention propose de stabiliser la structure avant en cas de choc frontal en offrant une nouvelle voie de transmission des efforts entre le berceau et les brancards avant passant par les extensions arrière du berceau. En effet, il a été constaté qu'en cas d'un scénario de choc frontal le berceau des véhicules à motorisation hybride ou électrique avait tendance à se déformer du fait de l'augmentation de masse liée à l'implantation des batteries de propulsion. Les recherches ont montré que les fixations du berceau pouvaient jouer un rôle dans ces phénomènes de déformation et avaient tendance à se mettre de travers sous l'effort. Les déformations pouvaient générer un déchirement des tôles et donc une perte d'une voie d'effort pour la retenue du moteur. Dans une telle situation, les risques d'intrusion du moteur dans l'habitacle sont augmentés ce qui est inacceptable. L'invention est remarquable en ce qu'en reliant les extensions arrière du berceau au brancard avant, elle offre une nouvelle voie de transmission des efforts par rapport aux voies déjà existantes, à savoir les fixations avant du berceau au brancard avant et les fixations du berceau au support de fixation arrière de berceau. La répartition des efforts entre les trois voies d'efforts va diminuer les sollicitations au niveau des fixations et résout au moins en partie les problèmes de déformation constatés.

Selon des modes de réalisation, au moins une extension arrière du berceau étant fixée à un brancard avant par l'intermédiaire d'au moins un tirant, le véhicule est remarquable en ce que ledit ou au moins un desdits tirants est fixé à une extension arrière et/ou à un brancard avant par vissage.

Selon des modes de réalisation, au moins une extension arrière du berceau étant fixée à un brancard avant par l'intermédiaire d'au moins un tirant, et le véhicule est remarquable en ce qu'au moins un tirant est une pièce rectiligne se présentant sous forme d'un profilé ou d'un corps creux. De préférence, au moins un tirant se présente sous forme d'un profilé rectiligne montrant au moins un bord de consolidation.

Selon des modes de réalisation, au moins une extension arrière du berceau étant fixée à un brancard avant par l'intermédiaire d'au moins un tirant, le véhicule est remarquable en ce que le ou au moins un des tirants est constitué d'un acier haute limite élastique et/ou le ou au moins un des tirants est réalisé dans une tôle présentant une épaisseur d'au moins 2 mm et/ou le ou au moins un des tirants montre au moins une nervure de rigidification s'étendant selon au moins une portion de sa longueur et/ou le ou au moins un des tirants est incliné de manière à ce qu'une de ses extrémités soit disposée supérieure à l'autre extrémité.

Selon des modes de réalisation, au moins un brancard avant est une pièce raboutée de sorte à montrer une partie avant et une partie arrière, la partie arrière montrant une résistance mécanique supérieure à la résistance mécanique de la partie avant, et au moins une extension arrière du berceau est fixée à la partie arrière dudit brancard avant directement ou par l'intermédiaire d'au moins un tirant. De préférence, les parties arrière et avant sont formées de deux nuances d'acier différentes.

Selon des modes de réalisation, les brancards avant montrant une extrémité arrière, le véhicule est remarquable en ce qu'il est un véhicule à motorisation hybride ou électrique comprenant au moins une batterie de propulsion ; en ce que le véhicule comprend au moins une pièce de liaison brancard longeron fixée au brancard avant et une traverse fixée à l'extrémité arrière dudit brancard avant, et au moins une extension arrière du berceau est fixée à un brancard avant directement ou par l'intermédiaire d'au moins un tirant en un emplacement situé entre la pièce de liaison brancard-longeron et une interface de fixation destinée à la fixation du brancard avant à ladite traverse.

Selon des modes de réalisation, le véhicule est un véhicule à motorisation thermique comprenant un moteur thermique, ou un véhicule à motorisation électrique comprenant au moins une batterie de propulsion, ou un véhicule à motorisation hybride comprenant un moteur thermique et au moins une batterie de propulsion. De préférence, le véhicule est un véhicule à motorisation hybride comprenant un moteur thermique et au moins une batterie de propulsion ou un véhicule à motorisation électrique comprenant au moins une batterie de propulsion. La mise en œuvre de l'invention est particulièrement intéressante dans le cas des véhicules à motorisation hybride et/ou électrique, elle est néanmoins applicable aux véhicules à motorisation thermique de manière à augmenter encore leurs prestations en matière de sécurité.

Selon un deuxième aspect, l'invention a pour objet un procédé de montage d'un véhicule selon le premier aspect, le procédé étant remarquable en ce qu'il comprend une étape de fixation d'au moins une extension arrière du berceau à un brancard avant par l'intermédiaire d'au moins un tirant ; de préférence, ladite étape de fixation se fait par vissage.

L'invention sera bien comprise et d'autres aspects et avantages apparaîtront clairement à la lecture de la description qui suit donnée en référence aux figures annexées sur lesquelles :
[Fig. 1] La figure 1 est une vue de dessous d'éléments de structure d'un véhicule selon l'invention
[Fig. 2] La figure 2 est une vue en perspective d'un tirant selon l'invention.

Dans la description qui suit, le terme « comprendre » est synonyme de « inclure » et n'est pas limitatif en ce qu'il autorise la présence d'autres éléments dans le véhicule ou d'autres étapes dans le procédé auquel il se rapporte. Il est entendu que le terme « comprendre » inclut les termes « consister en ». Les termes « haut » et « bas » s'entendront dans leur sens général, le terme « bas » désignant une proximité avec le sol plus importante. Sur les différentes figures, les mêmes références désignent des éléments identiques ou similaires.

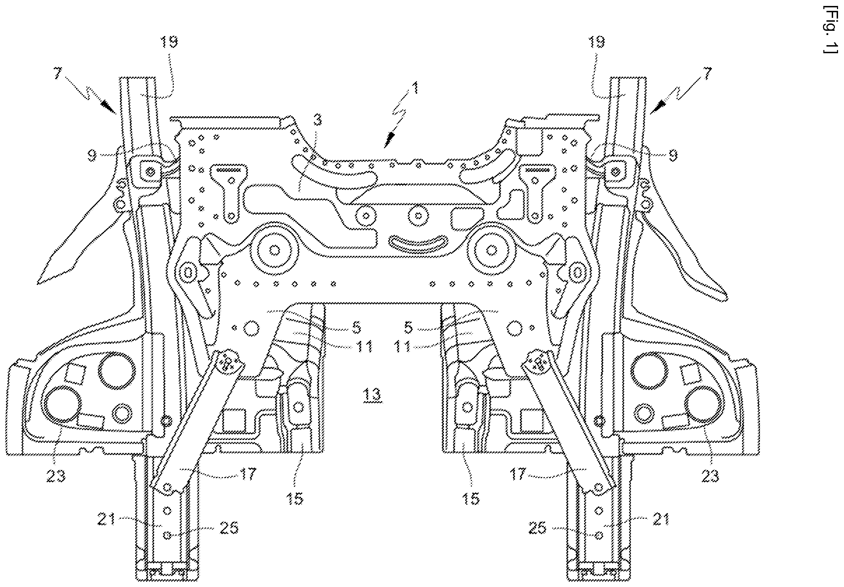

On se réfèrera tout d'abord à la figure 1 montrant une vue partielle d'une structure de caisse d'un véhicule selon l'invention, telle que vue de dessous, c'est-à-dire depuis le sol. Dans le mode de réalisation illustré, le véhicule est un véhicule à motorisation hybride comprenant un moteur thermique et au moins une batterie de propulsion. L'homme métier pourra néanmoins adapter l'invention aux véhicules à motorisation thermique comprenant un moteur thermique ou aux véhicules à motorisation électrique comprenant au moins une batterie de propulsion.

La structure de caisse comprend un berceau 1 montrant un corps 3 et une paire d'extensions arrière 5. La structure comprend également une paire de brancards avant 7 sur lesquels le berceau 1 est fixé. La partie avant du corps 3 du berceau 1 est fixé aux brancards avant 7 par l'intermédiaire de pièces de fixation 9 avant. La partie arrière du corps 3 du berceau 1 est fixée au soubassement par l'intermédiaire de supports 11 de fixation arrière de berceau. Les supports 11 de fixation arrière de berceau sont, eux-mêmes assemblés au brancard avant 7. Les supports 11 de fixation arrière de berceau sont agencés et dimensionnés pour laisser un passage 13, entre eux, destiné à recevoir le tunnel (non représenté). Le berceau 1 est également fixé par ses extensions arrière 5 auxdits supports 11 de fixation arrière de berceau et à des renforts de supports arrière de fixations de berceau 15 non représentés et assemblés à l'intérieur des supports de fixation arrière de berceau.

Le véhicule est remarquable en ce qu'au moins une extension arrière 5 du berceau est en outre fixée directement ou par l'intermédiaire d'au moins un tirant 17 aux brancards avant.

Dans un mode de réalisation non représenté, au moins une extension arrière du berceau est fixée directement aux brancards avant. Pour ce faire, la ou les extensions arrière montrent une longueur plus importante que dans les configurations habituelles de manière à s'étendre jusqu'au brancard avant qui est situé du même côté. On comprend que dans un tel cas, au moins une extension arrière est configurée pour s'étendre en direction de l'arrière du véhicule de manière à former un angle non-droit avec l'axe longitudinal du véhicule. Avantageusement, au moins une extension arrière montre au moins deux interfaces de fixation réparties sur sa longueur ; à savoir, une première interface de fixation destinée à sa fixation au support de fixation arrière de berceau ou à l'ensemble formé par un support de fixation arrière de berceau et un renfort de support de fixation berceau, et une deuxième interface de fixation destinée à sa fixation à un brancard avant. La ou les extensions arrière de berceau montrant deux extrémités, soit une extrémité d'ancrage reliée au corps du berceau et une extrémité libre terminale, la deuxième interface de fixation est disposée au niveau de l'extrémité terminale de la ou des extensions arrière de berceau.

Dans le mode de réalisation représenté en figure 1, le berceau 1 montre des extensions arrière 5 de taille habituelle, c'est-à-dire qu'elles ne s'étendent pas jusqu'au brancard avant 7 qui est situé du même côté. Leur fixation au brancard avant 7 se fait de manière indirecte par le biais de tirants 17. Ce mode de réalisation offre l'avantage de pouvoir utiliser le même berceau 1 pour les différentes versions du véhicule. Le berceau destiné à la version du véhicule montrant une motorisation thermique étant alors le même que celui destiné à la version du véhicule montrant une motorisation hybride ou électrique, il est possible d'effectuer des économies d'échelle. L'invention est remarquable en ce qu'elle permet d'adapter une architecture déjà existante pour les véhicules à motorisation thermique aux véhicules à motorisation hybride ou électrique.

Le tirant 17 est une pièce rectiligne montrant deux extrémités. Il est fixé à une extension arrière 5 par son extrémité avant et à un brancard avant 7 par son extrémité arrière. Selon un mode de réalisation préféré il est fixé à une extension arrière 5 et/ou à un brancard avant 7 par vissage. La fixation par vissage se fait au moment du montage du véhicule. Néanmoins, l'homme du métier aura avantage à ce que le tirant soit préassemblé avec le berceau 1 au moment de l'opération de coiffage.

Avantageusement, l'homme du métier pourra tirer avantage des interfaces de fixation déjà existantes entre les extensions arrière 5 du berceau et les supports 11 de fixation arrière de berceau ou l'ensemble formé par les supports 11 de fixation arrière de berceau et les renforts 15 de support de fixation berceau. Ainsi dans une mise en œuvre de l'invention, au moins une extension arrière 5 est fixée à un support 11 de fixation arrière de berceau et à un tirant 17 par une vis de fixation commune. De préférence, au moins une extension arrière 5 est fixée à un support 11 de fixation arrière de berceau, un renfort 15 de support de fixation berceau et un tirant 17 par une vis de fixation commune. Cette configuration permet de limiter le nombre de vis et d'opérations de vissage associées.

Avantageusement, le tirant 17 (ou le cas échéant l'extrémité terminale d'une extension arrière de berceau) est fixé au brancard avant 7 au niveau de sa partie arrière disposé sous le plancher du véhicule. Dans les véhicules à motorisation hybride ou électrique, les brancards avant 7 sont raccourcis par rapport aux brancards avant montrés par les véhicules à motorisation thermique. Quelle que soit la motorisation choisie pour le véhicule, l'homme du métier aura avantage à ce qu'au moins un brancard avant 7 soit une pièce raboutée montrant une partie avant 19 et une partie arrière 21. On rappelle au besoin que les pièces raboutées comprennent deux parties assemblées bout à bout. Il est donc possible d'utiliser des tôles montrant des nuances d'acier différentes et/ou des épaisseurs différentes lors de la fabrication d'un brancard avant 7.

Avantageusement, la partie arrière 21 d'au moins un brancard avant 7 montre une résistance mécanique supérieure à la résistance mécanique montrée par la partie avant 19 du même brancard avant 7. De préférence, les parties arrière 21 et avant 19 sont formées de deux nuances d'acier différentes. Ainsi, le berceau 1 est relié par ses extensions arrière soit directement, soit par l'intermédiaire d'au moins un tirant 17, à la partie montrant la résistance mécanique la plus importante, à savoir à la partie arrière 21 dudit brancard avant 7.

Par exemple, la partie arrière 21 du brancard avant 7 est constituée en un acier sélectionné parmi les aciers à haute limite élastique (HLE), les aciers à très haute limite élastique (THLE) ou les aciers à ultra haute limite élastique (UHLE). Ces aciers possèdent une structure à grains fins et présentent d'excellentes caractéristiques mécaniques (limite d'élasticité, résistance à la fatigue et résilience) ainsi qu'une bonne aptitude à la mise en forme.

Pour mémoire, les aciers doux montrent une limite d'élasticité allant de 300 à 350 MPa, les aciers à haute limite élastique (HLE) montrent une limite d'élasticité allant de 400 à 700 MPa, les aciers à très haute limite élastique (THLE) montrent une limite d'élasticité allant de 800 à 1000 MPa et les aciers à ultra haute limite élastique (UHLE) montrent une limite d'élasticité de 1100 à 1500 MPa. La limite d'élasticité est mesurée selon la norme ISO 6892-1 :2016.

Avantageusement, la structure de caisse du véhicule comprend également des longerons (non représentés) et des pièces de liaison 23 brancard-longeron. Lesdites pièces de liaison 23 brancard-longeron sont par exemple fixées aux brancards avant 7 par soudage.

Lorsque le véhicule est un véhicule à motorisation hybride ou électrique comprenant au moins une batterie de propulsion, la ou les batteries peuvent être fixées aux extrémités arrière des brancards avant 7. Par exemple, l'extrémité arrière du brancard avant 7 est fixée à une traverse (non représentée) sur laquelle est montée un podium portant au moins un cadre dans lequel est disposé au moins une batterie de propulsion. A cette fin, l'extrémité arrière des brancards avant 7 montre une interface de fixation 25 à la traverse. Cette interface de fixation 25 comprend par exemple un trou avec un écrou soudé pour la fixation par vissage desdits brancards avant 7 à ladite traverse.

Selon des modes de réalisation préférés de l'invention, le tirant 17 (ou le cas échéant l'extrémité terminale d'une extension arrière de berceau) est fixé au brancard avant en un emplacement situé entre la pièce de liaison 23 brancard-longeron et l'interface de fixation 25 destinée à la fixation du brancard avant 7 à la traverse portant les batteries de propulsion.

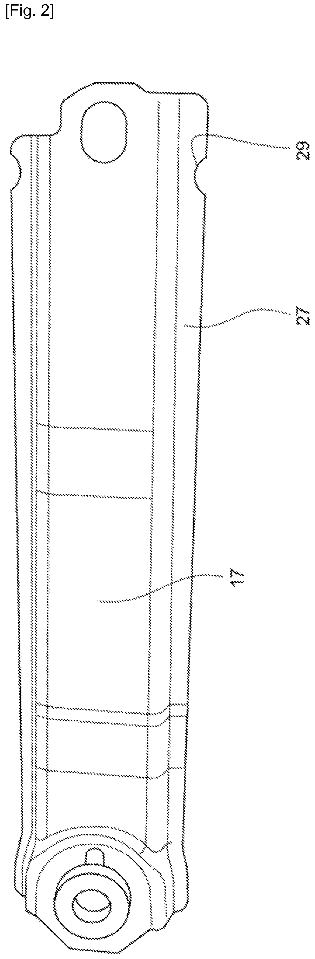

Selon des modes de réalisation préférés au moins une extension arrière 5 du berceau est fixée à un brancard avant 7 par l'intermédiaire d'au moins un tirant 17. Avantageusement, le tirant 17 est une pièce rectiligne se présentant sous forme d'un profilé ou d'un corps creux s'étendant selon une direction formant un angle non-droit avec la direction longitudinale du véhicule. Le tirant est orienté dans le sens d'avant en arrière en direction de l'extérieur du véhicule. Il est avantageusement incliné par rapport à l'horizontale de manière à ce qu'une de ses extrémités soit disposée supérieure à l'autre extrémité. Un exemple de réalisation d'un tirant 17 selon l'invention est illustré en figure 2.

Le tirant 17 montre avantageusement une hauteur aussi réduite que possible de manière à ne pas dégrader les prestations de garde au sol du véhicule. Par exemple, il montre une hauteur inférieure à 2,0 cm, de préférence inférieure à 1,5 cm, de préférence encore inférieure à 1,2 cm. Par exemple, il montre une hauteur comprise entre 0,2 et 2,0 cm, de préférence entre 0,3 et 1,2 cm, de préférence encore entre 0,5 et 1,0 cm. Il montre une longueur inférieure à 50 cm, par exemple entre 20 et 40 cm.

Lorsqu'il se présente sous forme d'un profilé, le tirant 17 peut être obtenu par emboutissage et montre avantageusement une forme en oméga avec au moins un bord de consolidation ; de préférence au moins un bord de consolidation montre une encoche 29 pour le passage d'un faisceau de fils électriques. Lorsqu'il se présente sous forme d'un corps creux, tel qu'un tube, ses extrémités sont avantageusement écrasées.

De préférence, le tirant 17 est constitué en acier, l'acier est préférentiellement sélectionné parmi les aciers à haute limite élastique (HLE), les aciers à très haute limite élastique (THLE) ou les aciers à ultra haute limite élastique (UHLE). Par exemple, le tirant 17 est constitué en acier à haute limite élastique.

Selon des modes de réalisation, au moins un tirant 17 est réalisé dans une tôle présentant une épaisseur d'au moins 2 mm ; par exemple au moins 2,5 mm. L'épaisseur sera choisie en fonction des prestations mécaniques recherchées.

Selon des modes de réalisation au moins un tirant 17 montre au moins une nervure de rigidification s'étendant selon sa longueur. L'homme du métier pourra envisager de renforcer la rigidité du tirant par d'autres moyens comme par exemple en allongeant les bords de consolidation lorsqu'ils sont présents ou en mettant un gousset.

L'invention se rapporte également à un procédé de fabrication d'un véhicule tel que défini plus avant comprend une étape de fixation d'au moins une extension arrière 5 du berceau à un brancard avant 7 soit directement soit par l'intermédiaire d'au moins un tirant 17. Ladite étape de fixation se fait préférentiellement par vissage.

## Revendications

1. Véhicule comprenant une paire de brancard avant (7) et un berceau (1), le berceau (1) comprenant un corps (3) et des extensions arrière (5), au moins une extension arrière (5) du berceau étant fixée à un brancard avant (7) par l'intermédiaire d'au moins un tirant (17), **caractérisé en ce que** le véhicule comprend en outre au moins un support (11) de fixation arrière de berceau et au moins un renfort (15) de support de fixation arrière de berceau, le véhicule est **caractérisé en ce qu'**au moins une extension arrière (5) du berceau est fixée à un support (11) de fixation arrière de berceau, à un renfort (15) de support de fixation arrière de berceau et à un tirant (17) par une vis de fixation commune.

2. Véhicule selon la revendication 1 **caractérisé en ce que** ledit ou au moins un desdits tirants (17) est fixé à une extension arrière (5) et/ou à un brancard avant (7) par vissage.

3. Véhicule selon l'une des revendications 1 à 2, dans lequel au moins une extension arrière (5) du berceau étant fixée à un brancard avant (7) par l'intermédiaire d'au moins un tirant (17), le véhicule est **caractérisé en ce qu'**au moins un tirant (17) est une pièce rectiligne se présentant sous forme d'un profilé ou d'un corps creux ; de préférence au moins un tirant se présente sous forme d'un profilé rectiligne montrant au moins un bord de consolidation.

4. Véhicule selon l'une des revendications 1 à 3, dans lequel au moins une extension arrière (5) du berceau étant fixée à un brancard avant (7) par l'intermédiaire d'au moins un tirant (17), le véhicule est **caractérisé en ce que** le ou au moins un des tirants (17) est constitué d'un acier haute limite élastique et/ou le ou au moins un des tirants (17) est réalisé dans une tôle présentant une épaisseur d'au moins 2 mm.

5. Véhicule selon l'une des revendications 1 à 4 dans lequel au moins une extension arrière (5) du berceau étant fixée à un brancard avant (7) par l'intermédiaire d'au moins un tirant (17), le véhicule est **caractérisé en ce que** le ou au moins un des tirants (17) est incliné de manière à ce qu'une de ses extrémités soit disposée supérieure à l'autre extrémité ; et/ou **en ce que** le ou au moins un des tirants (17) montre au moins une nervure de rigidification s'étendant selon au moins une portion de sa longueur.

6. Véhicule selon l'une des revendications 1 à 5, les brancards avant (7) montrant une extrémité arrière, le véhicule est **caractérisé en ce qu'**il est un véhicule à motorisation hybride ou électrique comprenant au moins une batterie de propulsion ; et/ou **en ce que** le véhicule comprend au moins une pièce de liaison (23) brancard longeron fixée au brancard avant (7) et une traverse fixée à l'extrémité arrière dudit brancard avant, et au moins une extension arrière (5) du berceau est fixée à un brancard avant (7) directement ou par l'intermédiaire d'au moins un tirant (17) en un emplacement situé entre la pièce de liaison (23) brancard-longeron et une interface de fixation (25) destinée à la fixation du brancard avant (7) à ladite traverse.

7. Véhicule selon l'une des revendications 1 à 6, **caractérisé en ce qu'**au moins un brancard avant (7) est une pièce raboutée de sorte à montrer une partie avant (19) et une partie arrière (21), la partie arrière (21) montrant une résistance mécanique supérieure à la résistance mécanique de la partie avant (19), et au moins une extension arrière (5) du berceau est fixée à la partie arrière (21) dudit brancard avant (7) directement ou par l'intermédiaire d'au moins un tirant (17); de préférence, les parties arrière (21) et avant (19) sont formées de deux nuances d'acier différentes.

8. Procédé de montage d'un véhicule selon l'une des revendications 1 à 7, **caractérisé en ce qu'**il comprend une étape de fixation d'au moins une extension arrière (5) du berceau à un brancard avant (7) par l'intermédiaire d'au moins un tirant (17) ; de préférence, ladite étape de fixation se fait par vissage.

## Patentansprüche

1. das ein Paar vorderer Tragarme (7) und ein Gestell (1) umfasst, wobei das Gestell (1) einen Körper (3) und zumindest hintere Verlängerungen (5) umfasst Eine hintere Verlängerung (5) der Wiege ist an einer vorderen Trage (7) befestigt durch Zwischenschaltung mindestens eines Zuggliedes (17), **dadurch gekennzeichnet, dass** das Fahrzeug Weiterhin ist mindestens ein hinterer Befestigungsträger (11) für ein Gestell und mindestens eine Verstärkung (15) für einen hinteren Befestigungsträger für ein Gestell **dadurch gekennzeichnet, dass** mindestens eine hintere Verlängerung (5) des Gestells an einem hinteren Befestigungsträger (11) für ein Gestell und an einer Verstärkung (15) für einen hinteren Befestigungsträger für ein Gestell befestigt ist und einem Zugglied (17) durch eine gemeinsame Befestigungsschraube.

2. **dadurch gekennzeichnet, dass** die mindestens eine Zugstange (17) an einer hinteren Verlängerung (5) und/oder an einer vorderen Trage (7) durch Verschrauben befestigt ist.

3. Fahrzeug nach einem der Ansprüche 1 bis 2, bei dem wenigstens eine hintere Verlängerung (5) des Gestells über wenigstens eine Zugstange (17) an einer vorderen Trage (7) befestigt ist und das Fahrzeug **dadurch gekennzeichnet ist, dass** wenigstens eine Zugstange (17) ein geradliniges Teil in Form eines Profils oder einer Zugstange ist Hohlkörper, vorzugsweise mindestens ein Zugglied, in Form eines Profils Geradlinig mit mindestens einem Konsolidierungsrand.

4. Fahrzeug nach einem der Ansprüche 1 bis 3, wobei mindestens Eine hintere Verlängerung (5) der Wiege ist an einer vorderen Trage (7) befestigt durch Über mindestens einen Zugstab (17) ist das Fahrzeug **dadurch gekennzeichnet, dass** der oder Mindestens eine der Zugstangen (17) besteht aus einem elastischen Hochgrenzstahl und/oder die mindestens eine Zugstange (17) ist aus einem Blech mit einer Dicke von mindestens 2 mm hergestellt.

5. Fahrzeug nach einem der Ansprüche 1 bis 4, bei dem mindestens Da eine hintere Verlängerung (5) der Wiege über mindestens eine Zugstange (17) an einer vorderen Trage (7) befestigt ist, ist das Fahrzeug **dadurch gekennzeichnet, dass** die oder mindestens eine Zugstange (17) derart geneigt ist, dass ein Ende der Zugstange höher als das andere Ende angeordnet ist, und/oder dass die oder mindestens eine der Zugstangen Zuganker (17) weist mindestens eine sich mindestens um Ein Teil seiner Länge.

6. Fahrzeug nach einem der Ansprüche 1 bis 5, wobei die vorderen Tragarme (7) ein hinteres Ende aufweisen und das Fahrzeug **dadurch gekennzeichnet ist, dass** es ein Fahrzeug ist Hybrid- oder Elektromotor mit mindestens einer Antrieb; und/oder **dadurch gekennzeichnet, dass** das Fahrzeug wenigstens ein Verbindungsteil (23) für einen Längsträger aufweist, das an dem vorderen Längsträger (7) befestigt ist, und eine Traverse, die an dem hinteren Ende des vorderen Längsträgers befestigt ist, und dass wenigstens eine hintere Verlängerung (5) der Wiege an einem vorderen Längsträger (7) direkt oder über wenigstens eine Zugstange befestigt ist
(17) an einer Stelle zwischen dem Verbindungsstück (23) Tragbalken und einem Befestigungsschnittstelle (25) zur Befestigung des vorderen Traggestells (7) an dem Querträger.

7. Fahrzeug nach einem der Ansprüche 1 bis 6, **dadurch gekennzeichnet, dass** mindestens eine vordere Tragleiste (7) ein teilweise zeigendes Hobel ist Vorderseite (19) und Rückseite (21), wobei die Rückseite (21) einen Widerstand aufweist Mechanisch oberhalb der mechanischen Festigkeit des vorderen Teils (19) ist mindestens eine hintere Verlängerung (5) des Gestells direkt oder über mindestens einen Zuganker (17) am hinteren Teil (21) des vorderen Gestells (7) befestigt; vorzugsweise sind der hintere Teil (21) und der vordere Teil (19) aus zwei Stahlschattierungen gebildet Unterschiedlich.

8. Verfahren nach Anspruch 8 zur Montage eines Fahrzeugs nach einem der Ansprüche 1 bis 7, **dadurch gekennzeichnet, dass** es einen Schritt der Befestigung mindestens einer hinteren Verlängerung (5) des Gestells an einer vorderen Trage (7) über mindestens einen Zugstab umfasst (17); vorzugsweise erfolgt der Befestigungsschritt durch Verschrauben.

## Claims

1. Vehicle comprising a pair of front side brackets (7) and a cradle (1), the cradle (1) comprising a body (3) and rear extensions (5), at least a rear extension (5) of the cradle being fixed to a front stretcher (7) by at least one tie rod (17), **characterised in that** the vehicle comprises
in addition, at least one cradle-rear attachment bracket (11) and at least one cradle-rear attachment bracket reinforcement (15), the vehicle is **characterised in that** at least one rear extension (5) of the cradle is attached to a cradle-rear attachment bracket (11) and to a cradle-rear attachment bracket reinforcement (15) and to a tie rod (17) by a common fixing screw.

2. The vehicle as claimed in claim 1, wherein said at least one of said tie rods (17) is fixed to a rear extension (5) and/or to a front stretcher (7) by screwing.

3. Vehicle according to one of Claims 1 to 2, in which at least one rear extension (5) of the cradle is fixed to a front side-piece (7) by means of at least one tie-rod (17), the vehicle is **characterised in that** at least one tie-rod (17) is a rectilinear component in the form of a section or a hollow body; preferably at least one tie rod is in the form of a section
straight line showing at least one consolidation edge.

4. Vehicle according to one of Claims 1 to 3, in which at least
a rear extension (5) of the cradle being fixed to a front stretcher (7) by the vehicle is **characterised in that** the or at least one of the tie rods (17) consists of a high elastic limit steel and/or the or at least one of the tie rods (17) is realised in a sheet having a thickness of at least 2 mm.

5. Vehicle according to one of Claims 1 to 4, in which at least
since a rear extension (5) of the cradle is fixed to a front stretcher (7) by means of at least one tie rod (17), the vehicle is **characterised in that** the or at least one of the tie rods (17) is inclined so that one of its ends is arranged above the other end; and/or **in that** the or at least one of the tie rods (17) show at least one stiffening rib extending along at least
a portion of its length.

6. Vehicle according to one of Claims 1 to 5, the front stretchers (7) showing a rear end, the vehicle is **characterised in that** it is a vehicle hybrid or electric motor comprising at least one battery of propulsion; and/or **in that** the vehicle comprises at least one connecting component (23) side-rail fastened to the front side-rail (7) and a cross-member fastened to the rear end of said front side-rail, and at least one rear extension (5) of the cradle is fastened to a front side-rail (7) directly or via at least one tie rod (17) at a location between the connecting component (23) side rail and a fastening interface (25) for fastening the front strut (7) to said cross-member.

7. Vehicle according to one of Claims 1 to 6, **characterised in that** at least one front stretcher (7) is a component which is butt-jointed so as to show a part front part (19) and a rear part (21), the rear part (21) showing a resistance mechanical strength greater than the mechanical strength of the front part (19), and at least one rear extension (5) of the cradle is fixed to the rear part (21) of said front side brace (7) directly or via at least one tie rod (17); preferably, the rear part (21) and the front part (19) are made of two steel grades different.

8. A method of assembly line a vehicle according to any one of claims 1 to 7, comprising a step of fixing at least one rear extension (5) of the cradle to a front stretcher (7) by means of at least one tie rod (17); preferably, said fixing step is carried out by screwing.
